# Europäisches Patentamt

# European Patent Office

# Office européen des brevets

(11) Publication number: **0 210 268**
**B1**

(12) # EUROPEAN PATENT SPECIFICATION

(45) Date of publication of patent specification: **21.09.88**

(51) Int. Cl.⁴: **F 16 L 41/08, B 21 K 1/14**

(21) Application number: **86901450.6**

(22) Date of filing: **24.02.86**

(86) International application number:
**PCT/GB86/00099**

(87) International publication number:
**WO 86/04973 28.08.86 Gazette 86/19**

(54) **TRANSITION PIECES.**

(30) Priority: **22.02.85 GB 8504604**

(43) Date of publication of application:
**04.02.87 Bulletin 87/06**

(45) Publication of the grant of the patent:
**21.09.88 Bulletin 88/38**

(84) Designated Contracting States:
**BE DE FR GB IT NL SE**

(56) References cited:
**EP-A-0 101 312**
**GB-A-2 136 329**
**GB-A-2 136 904**
**GB-D-1 014 342**
**GB-D-1 018 263**
**US-A-1 857 526**
**US-A-2 109 915**
**US-A-4 438 955**
**US-A-4 450 613**
**US-D- 243 456**
**US-D- 243 457**
**US-D- 254 266**
**US-D- 267 505**

(73) Proprietor: **PROMAT ENGINEERING SERVICES LIMITED**
**Unit 1, Dunsinane Avenue Dunsinane Industrial Estate**
**Dundee DD2 3QF (GB)**

(72) Inventor: **KIRKWOOD, Iain, William, MacLean**
**125 Broomhill Road**
**Aberdeen (GB)**

(74) Representative: **Wotherspoon, Graham et al**
**FITZPATRICKS 4 West Regent Street**
**Glasgow G2 1RS Scotland (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to pipework and fittings therefor. Particularly, it relates to transition pieces for attaching branch pipes, valves, etc to a pipe at a position intermediate its ends.

It is known to provide a flanged outlet on a pipe using two separate parts each one of which has to be welded into place. The first of these parts is shaped to provide the desired angle for the proposed branched pipe and the second part provides a flange for attaching the branch pipe. An aperture is cut in the pipe and the appropriate connector piece fitted into the aperture and welded into place. The flanged piece is then welded to the protruding connector piece.

This procedure has several disadvantages the first of which is that it is a slow procedure and the second is that the plurality of welds provides a plurality of possible weak spots and corrosion points. In addition, the strength of the transition piece cannot be guaranteed to be uniform throughout the piece.

Typical connector pieces are described in US—A—4,438,955, US—A—4,450,613, US—A—2,109,915, GB—A—2,136,329, and GB—A—2,136,904, and in US Design Patents D243,456, D243,457, D254,266, D262,397 and D267,505 and GB Design Registrations 1,014,342 and 1,018,263.

One of the known products provides a transition or connector piece having a cylindrical neck, a cylindrical throughbore and a flange at one end. This product, to be described in more detail hereinbelow, is not entirely satisfactory because it is a relatively heavy, rigid component in comparison with the pipe to which it is welded. Such is the strength and inflexibility of this component that in use severe stress in the structure as a whole focuses on the conntector-to-pipe weld which is liable to shear under the severe loading received.

It is now proposed according to this invention to provide a transition piece by forging whereby an improved transition piece is formed as a single unit.

Accordingly, this invention provides a transition piece formed by forging as a single component which comprises a flanged end portion, a tapered neck portion and a flared neck portion, said tapered neck portion tapering from the flanged end portion towards a waist portion intermediate the length of the component, said flared neck portion flaring from the waist portion towards the end of the component remote from the flanged end portion, said component having a throughbore running the length of the component.

This component is preferably drop forged and then machine finished. This finishing treatment is beneficial because

a) the surface finish is improved which can be a significant feature in fatigue, and

b) some of the undesirable metallurgical regions and oxides are removed from the surface.

As mentioned above, there have been various types of branch fittings available for many years, in the form of single or multiple welded components to form the actual branch connection. Some fittings can be quite heavy, thus providing greater restraint than one might wish for, especially when said fittings are connected to thinner walled piping or are constructed by welding two components together. Stiffness and vibration are closely related and if the latter exists then the joint between the rigid fitting and the pipe provides a possible source of failure by fatigue. Particularly, failure and cracking problems have been observed with two component arrangements in the presence of vibration or cyclic loads (which exist in most operational structures). In marked contrast to these known fittings the unique shape of the component of this invention reduces component weight without detrimental effect on the strength of the component and significantly improves the flexibility of the joint with connecting pipework thereby allowing heavier loadings to be accommodated without joint failure. An important feature of the component of this invention is the gradual reduction of rigidity from either end of the component towards a portion of minimum rigidity at a position remote from the welded and flanged end portions of the transition piece. In addition, by forming the component by forging, the material flow-line pattern is good, these forging flow-lines being substantially parallel throughout the length of the neck portion of the component. This factor alone means that the component of this invention has the advantage of reduced fatigue crack initiation and fatigue crack propagation since there are fewer initial material flaws inherent in the component. Thus, the strength and integrity of the forged component will be superior to that of, for example, a similar component fabricated out of welded hot-rolled plate and tube.

There is, of course, the obvious advantage of elimination of one weld by using the one component transition piece of this invention with accompanying advantages of elimination of poor weld profiles (ie undercut, sharp contours, etc) and heat affected zone anomalies. Further, mismatch of the fitting is eliminated which is another source of stress in the conventional two component fitting.

Preferably, the throughbore of the component of this invention is contoured to minimise fluid turbulence in use by providing divergence of the diameter of the throughbore in the region of the welded end of the component to a pipe. It is not normally necessary to alter the diameter of the throughbore at the flanged end of the component.

Preferably also, the pipe engaging end of the component is contoured (inside and out) to form a smooth transition at the main weld region. The effect of the transition can be significant in changing the stress concentration which, if reduced, increases the fatigue life of the welded component.

A comparison between the prior art and the invention will now be made with reference to

Figs. 1 to 3 of the accompanying drawings, in which,

Fig. 1 is a sectional detail, to an enlarged scale, of a typical outlet part welded to a pipe and a flanged part welded to the outlet part;

Fig. 2 is a section of a known flanged outlet for welding to a pipe; and

Fig. 3 is a section similar to Fig. 2 of a flanged outlet according to the invention for welding to a pipe.

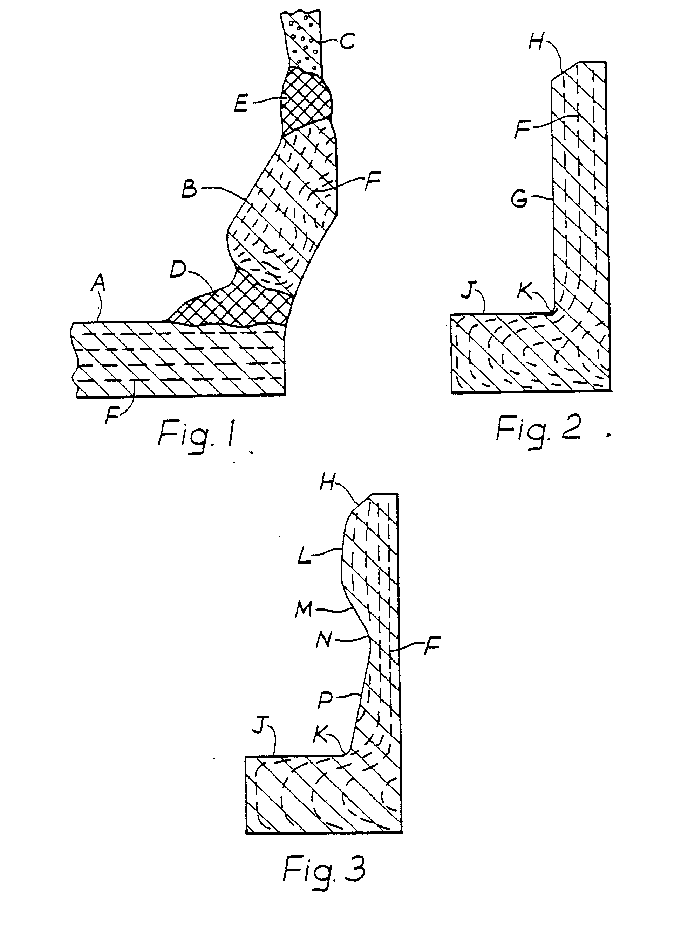

In Fig. 1, a pipe is shown at A, an outlet part is shown at B and the end of a flanged part opposite the flange (not shown) is shown at C. The axis of the two part flanged outlet should be imagined as being a vertical line to the right-hand side of the figure. Welds are shown at D and E. Parallel flow-lines F are shown in the pipe A, and more random flow-lines F are shown in the part B. In the part C, flow-lines are not evident. This structure has a short fatigue life in that failure occurs at either or both of the welds D and E.

In Fig. 2, a known one-piece flanged outlet is shown comprising a plain tubular neck G having a bevelled end H for welding to a pipe and a flange J at its other end. Again, the axis of the flanged outlet should be imagined as being a vertical line to the right-hand side of the figure. The flow-lines F are shown as being parallel in the neck G and thus the neck has a substantially constant rigidity throughout its length. Thus, failure occurs at the welded end H and, furthermore, a stress concentration occurs at the root K of the flange.

In Fig. 3, a one-piece flanged outlet according to the invention is shown comprising a neck having the bevelled end H for welding to a pipe and the flange J at its other end. Again, the axis of the flanged outlet should be imagined as being a vertical line to the right hand side of the figure. The neck extends from the bevelled end H substantially as a plain tube L for a short distance which then curves into a tapered portion M which merges into a waist N. From the curved root K of the flange J the neck has another portion P which tapers into the waist N. The flow-lines F are shown again being parallel in the neck so that the rigidity of the neck is a function of its diameter, being at a minimum at the waist N with no sharp changes occurring the length of the neck. Thus, in use, stresses which would otherwise occur at the welded end H and the root K are absorbed at the waist N as it flexes. This prolongs the fatigue life of the flanged outlet.

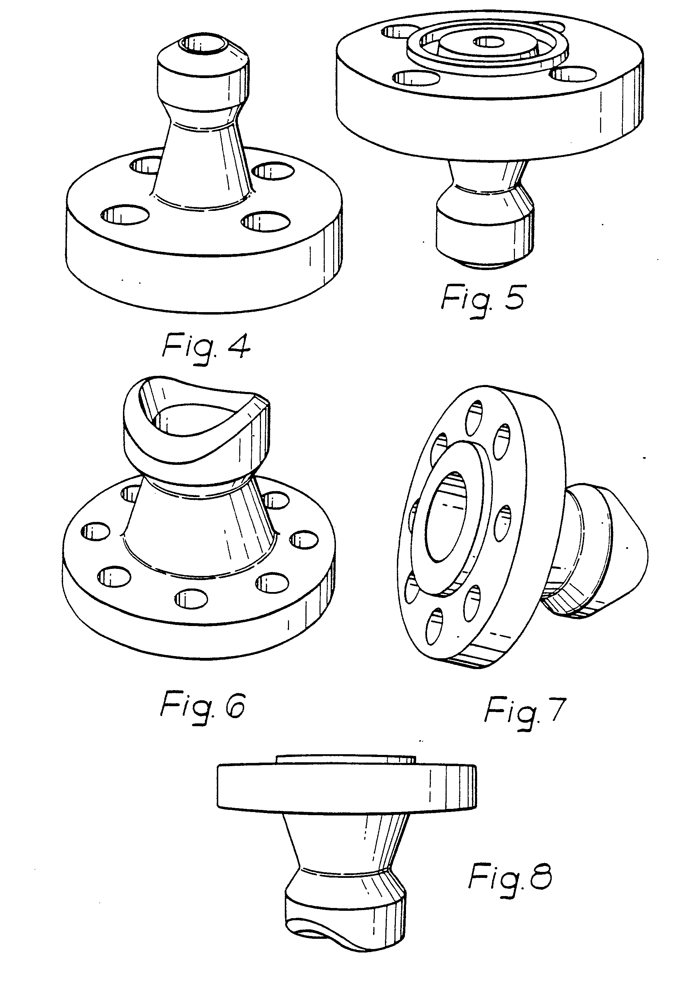

Embodiments of the invention will now be described, by way of example, with reference to Figs. 4 to 14 of the accompanying drawings, in which,

Figs. 4 and 5 show perspective views of a transition piece according to the invention;

Figs. 6, 7 and 8 show respectively perspective views and a side view of a transition piece according to the invention;

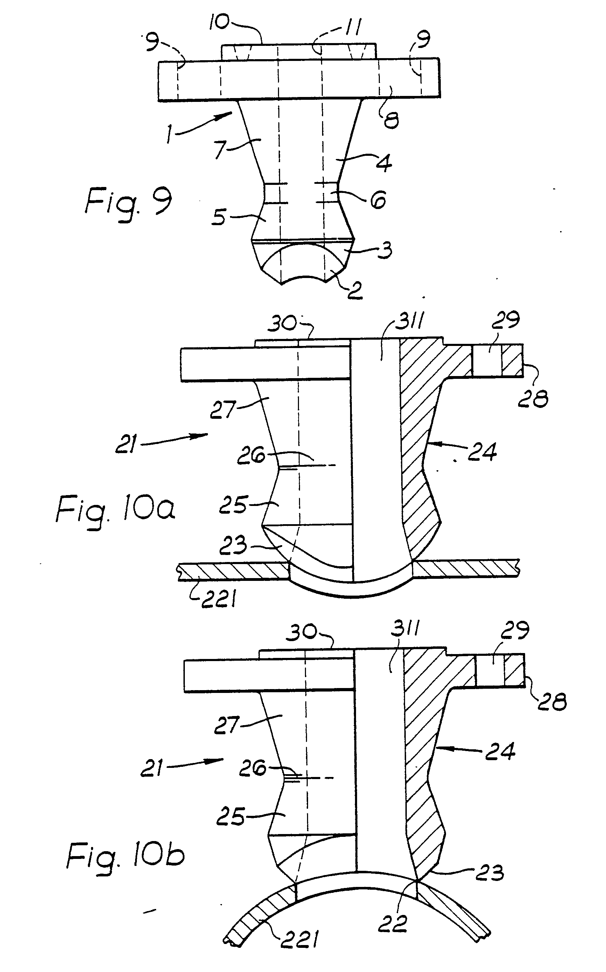

Fig. 9 is a side view of a flanged transition piece which would be used for providing a means for securing a branch pipe at right angles to another pipe;

Fig. 10a is a view partly in section of another transition piece of a similar type to that shown in Fig. 1, but having a diverging throughbore at that end located in a pipe and viewed transversely to that pipe;

Fig. 10b is another view of the transition piece shown in Fig. 10a as viewed from one end of the pipe;

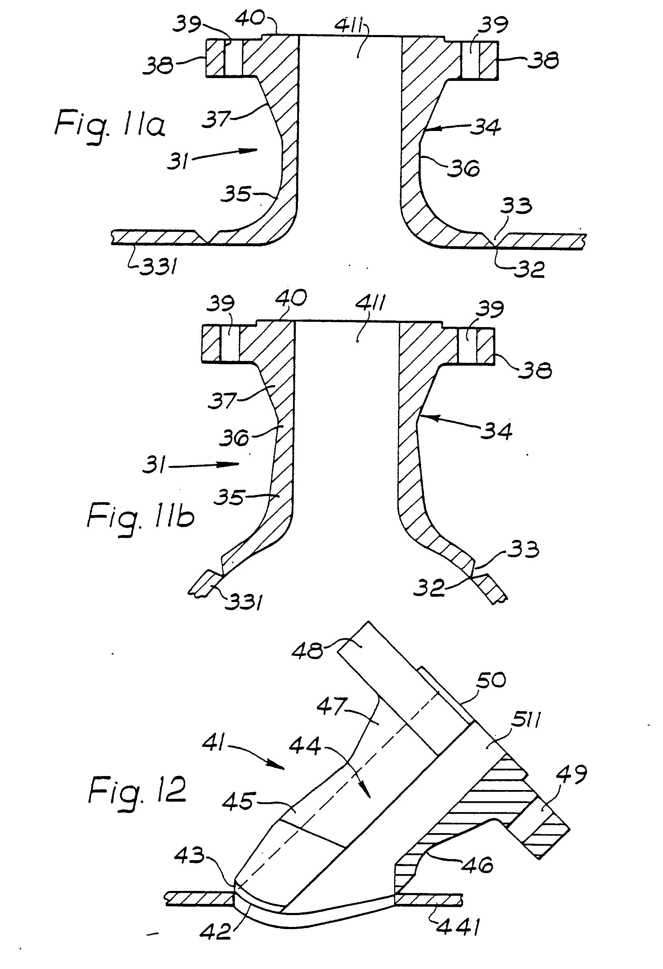

Fig. 11a is a view in section of a further transition piece located in a large aperture in a pipe and viewed transversely to that pipe;

Fig. 11b is a view of the transition piece shown in Fig. 3a as viewed from one end of the pipe;

Fig. 12 is a view partly in section of a transition piece used for attaching a branch pipe to a main pipe;

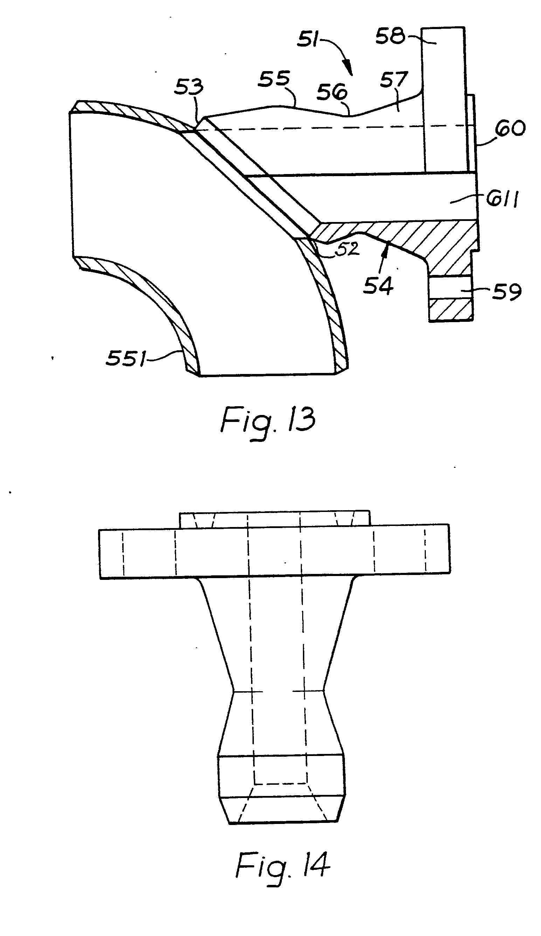

Fig. 13 is a view partly in section of a transition piece adapted for attaching a branch line to a curved pipe; and

Fig. 14 is a side view of a transition piece of this invention similar to those shown in Figs. 4, 5 and 9 but modified to avoid tubulent flow in fluids passing from the pipeline through the transiton piece to a branch line by providing a divergence in the throughbore at the end which is to be located in the pipeline.

In an embodiment of the invention as shown in Fig. 9 a transition piece for use in providing a right-angled connection for a branch pipe comprises a single drop forged piece (1) having pipe engaging surfaces (2) weld receiving surfaces (3) a body (4) having a portion (5) tapering to a waist (6) and another portion (7) flaring outwards to a flange (8) which has stud or bolt receiving apertures (9). The piece (1) has a branch pipe contacting face (10) and a throughbore (11) for providing a through passage between the branch pipe and the main pipe. The waisted body (4) of the piece facilitates positioning of the piece and location and tightening of the bolts or studs whilst avoiding excessive rigidity, but retaining the maximum required strength for the piece as a whole. In a further embodiment as shown in Fig. 10, a transition piece (21) is shown in place on a pipe (221). Parts of this transition piece of similar function to those of the piece shown in Fig. 9 are numbered likewise from numbers 22 to 30, a throughbore being identified by the numeral (311).

In a still further embodiment of the invention as shown in Fig. 11, a further transition piece (31) of this invention is shown in place in a large aperture in a pipe (331). Parts performing the same function as those of the embodiment shown in Fig. 9 are identified by the numerals (32) to 40) with the throughbore being identified by the numeral (411).

In yet another embodiment of the invention (Fig. 12) a transition piece (41) for attaching a branch pipe at an angle to a main pipe oblique to the pipe (441) is shown. Similar parts to those of the transition piece (1) shown in Fig. 9 are identified by the numerals (41) to (50) with the throughbore being identified by the numeral (511). In a further embodiment of the invention, a transition piece (51) for attaching a branch pipe to a curved or elbow bend in a pipe (551) as shown in Fig. 13 comprises parts of a similar function to those of the transition piece (1) shown in Fig. 9 and likewise are identified by the numerals (51) to (60) with the throughbore being identified by the numeral (611).

The main advantages of the above fittings are as follows:

1) variety of end connections available, ie raised face, ring type joint and flat face.

2) only one weld is required when welding these fittings to pipework where before two were normally required, thus savings are made in the following areas:

(a) costs—labour/materials

(b) lost production time

(c) less corrosion points which adds to the safety factors of the fitting and which means it is also suitable for hazardous areas where vibration is apparent.

(d) through-thickness and grain-run of material remains constant throughout the fitting, ensuring maximum strength in accordance with A.N.S.I.B16.9 and USA standard codes for pressure piping.

(e) reduces amount of combinations on wall thickness sizes between the flange and weldolet giving overall strength.

(f) the usefulness of the fittings increases application on carbon steel and exotic metals not previously exploited.

(g) strength compatible with the structure of the pipeline system as a whole is obtained without risk of excessive loadings causing shearing of the weld between the transition piece and the pipeline, the said piece "giving" to absorb and redistribute loadings due to the provision of the "waist" portion.

Metallurgical tests on the transition pieces of this invention have shown that the said pieces are superior in quality and less prone to fatigue than currently available transition pieces.

Computer analysis of general field stresses on the transition pieces of this invention are lower than in conventional arrangements.

Standard tests were carried out on the fittings before representatives of international companies prominent in the oil and gas industry and Lloyds' Register of Shipping. These tests included a standard burst test to establish the integrity of the branch connections of this invention with regard to burst test requirements of current pressure piping design specifications used in the petrochemical industry at present. Two test spools were fabricated and both spools burst in the run pipe at pressures in excess of burst test design requirements. The tests were therefore deemed successful. Similar success was noted with hydraulic leak and destruct tests. Lloyds' Register of Shipping has approved the transition pieces and prominent companies in the field have indicated a strong interest in making the transition pieces of this invention standard fittings for future use.

The volume of data available on the transition pieces of this invention is too great to reproduce herein, but suffice it to say that provision of a "waist" in the product has produced unexpectedly beneficial effects.

## Claims

1. A transition piece (1; 21; 31; 41; 51) comprising a flanged end portion (8; 28; 38; 48; 58) and a neck part, being formed by forging as a single component characterised in that the neck part comprises a tapered neck portion (7; 27; 37; 47; 57) and a flared neck portion (5; 25; 35; 45; 55), said tapered neck portion tapering from the flanged end portion towards a waist portion (6; 26; 36; 46; 56) intermediate the ends of the component, said flared neck portion flaring from the waist portion towards the end (2; 22; 32; 42; 52) of the component remote from the flanged end portion, said component having a throughbore (11; 311; 411; 511; 611) running the length of the component.

2. A transition piece according to claim 1, wherein the throughbore formed therein is contoured to minimise fluid turbulence in use in that the diameter of the throughbore diverges in the region of the end of the component remote from the flanged end portion.

3. A transition piece according to claim 1 or claim 2 wherein the single component is formed by drop-forging.

## Patentansprüche

1. Übergangsstück (1; 21; 31; 41; 51), das ein in einem Stück geschmiedetes Bauteil ist mit einem Flansch (8; 28; 38; 48; 58) an einem Ende und mit einem Halsstück, dadurch gekennzeichnet, dass das Halsstück einen sich verjüngenden Halsabschnitt (7; 27; 37; 47; 57) und einen sich erweiternden Halsabschnitt (5; 25; 35; 45, 55) aufweist und der sich verjüngende Halsabschnitt sich vom Ende mit dem Flansch ausgehend bis zu einer zwischen den beiden Enden des Bauteils gelegenen Taille (6; 26; 36, 45; 56) verjüngt und der sich erweiternde Halsabschnitt sich von der Taille ausgehend in Richtung auf das dem Flansch gegenüberliegende Ende (2, 22; 32; 42; 52) des Bauteils erweitert und das Bauteil ein auf voller Länge durchgehendes Loch (11; 311; 411; 511; 611) enthält.

2. Übergangsstück nach Anspruch 1, dadurch gekennzeichnet, dass die Kontur des darin befindlichen durchgehenden Lochs zum Erzielen einer möglichst geringen Turbulenz in einem hindurchströmenden Medium ausgebildet ist, indem es im Bereich des dem Flansch gegenüberliegenden Endes des Bauteils mit einem sich erweiternden Durchmesser ausgebildet ist.

3. Übergangsstück nach Anspruch 1 oder 2, dadurch gekennzeichnet, dass es ein einstückiges Gesenkschmiedebauteil ist.

## Revendications

1. Pièce de transition (1; 21; 31; 41; 51) comprenant une partie d'extrémité à bride (8; 28; 38; 48; 58) et un collet, formée par forgeage sous la forme d'un composant unique, caractérisée en ce que le collet comprend une partie à collet convergent (7; 27; 37; 47; 57) et une partie à collet divergent (5; 25; 35; 45; 55) ladite partie à collet convergent s'amincissant à partir de l'extrémité à bride vers une région amincie (6; 26; 36; 46; 56) située entre les extrémités du composant, ladite partie à collet divergent augmentant d'épaisseur à partir de la région amincie vers l'extrémité (2; 22; 32; 42; 52) du composant opposée à l'extrémité à bride, ledit composant ayant une orifice traversant (11; 311; 411; 511; 611) qui s'étend sur la longueur du composant.

2. Pièce de transition suivant la revendication 1, dans laquelle l'orifice traversant formé dans la pièce est profilé de manière à minimiser la turbulence du fluide en utilisation, en ce que le diamètre de l'orifice traversant diverge dans la région de l'extrémité du composant opposée à l'extrémité à bride.

3. Pièce de transition suivant la revendication 1 ou la revendication 2, dans laquelle le composant unique est formé par estampage.

Fig. 1

Fig. 2

Fig. 3

0 210 268

Fig. 4

Fig. 5

Fig. 6

Fig. 7

Fig. 8

Fig. 9

Fig. 10a

Fig. 10b

Fig. 11a

Fig. 11b

Fig. 12

Fig. 13

Fig. 14

5